# EUROPÄISCHE PATENTSCHRIFT

(11) **EP 2 931 555 B1**
(45) Veröffentlichungstag und Bekanntmachung des Hinweises auf die Patenterteilung: **07.11.2018**
(21) Anmeldenummer: 13802942.6
(22) Anmeldetag: 09.12.2013
(51) Int. Cl.: B60N 2/42, B60N 2/427, B60N 2/68

(54) **KRAFTFAHRZEUG**
VEHICLE
VEHICULE

(30) Priorität: 17.12.2012 DE 102012223426
(43) Veröffentlichungstag der Anmeldung: 21.10.2015
(73) Patentinhaber: Bayerische Motoren Werke Aktiengesellschaft, 80809 München (DE)
(72) Erfinder: MÜLLER, Andreas, 84079 Bruckberg (DE)
(86) Internationale Anmeldenummer: PCT/EP2013/075942
(87) Internationale Veröffentlichungsnummer: WO 2014/095454

(56) Entgegenhaltungen:
- DE-A1- 10 047 770
- DE-A1-102010 019 577
- DE-A1-102011 106 219
- DE-U1-202011 105 603
- JP-U- H0 570 344
- JP-U- H0 570 345

## Beschreibung

Die Erfindung betrifft ein Kraftfahrzeug gemäß dem Oberbegriff des Anspruchs 1.

Aus der DE 100 47 770 A1 ist bereits ein Sitz für ein Kraftfahrzeug bekannt, bei dem an zwei gegenüberliegenden Lehnenschwertern Seitenholme einer Rahmenstruktur für eine Rückenlehne befestigt sind.

Die beiden aus der DE 100 47 770 A1 bekannten Seitenholme weisen einen sich von unten nach oben hin verjüngenden Querschnitt auf. Der jeweilige Querschnitt der beiden bekannten Seitenholme ist entsprechend einer Belastung ausgelegt, die bei einer Belastung durch einen sich an die Rückenlehne anlehnenden Sitzbenutzer und/oder bei einer Belastung durch einen Auffahrunfall entsteht.

Durch die verjüngende Form der Seitenholme ergibt sich eine optimale Materialausnutzung. Die bekannten Seitenholme sind in Bezug auf ihre Form und hinsichtlich ihrer Wandstärke so ausgelegt, dass die über die Lehnenhöhe des Sitzes übertragbare Biegespannung gleich bleibt.

Aus der JP H05 70344 U ist ein U-förmiger Rahmen für eine Rückenlehne bekannt. In den Seitenholmen des Rahmens sind Hohlräume ausgebildet, in denen schräg verlaufende Abschnitte vorgesehen sind, die fachwerkartig in Knotenpunkten miteinander verbunden sind.

Aus der JP H05 70345 U ist ein der JP H05 70344 U ähnlicher Rahmen für eine Rückenlehne eines Fahrzeugsitzes bekannt. Im Unterschied zu der JP H05 70344 U ist zusätzlich auf einer Vorderseite des jeweiligen Seitenholmes eine offene Aussparung vorgesehen. Ferner sind auf einer Rückseite des jeweiligen Seitenholmes zwei Aussparungen vorgesehen.

Aufgabe der Erfindung ist es, ein Kraftfahrzeug zu schaffen, bei dem mindestens ein Fahrzeugsitz angeordnet ist, der bei eine m belastungsgerechten Aufbau gleichzeitig leicht baut.

Diese Aufgabe wird durch die Merkmale des Anspruchs 1 gelöst.

Bei einem erfindungsgemäßen Kraftfahrzeug weist eine Karosserie einen Boden auf. An dem Boden ist mindestens ein Sitz oder mindestens eine Sitzbank angeordnet. Der Sitz weist ein Sitzteil mit einer Sitzfläche und eine Rückenlehne mit einer Anlehnfläche auf. Das Sitzteil ist mit einem Sitzrahmen versehen. An einem hinteren Bereich des Sitzrahmens ist jeweils ein Verstellmechanismus ausgebildet, der eine Schwenkachse bildet, um die die Rückenlehne verschwenkbar ist. In Höhe der Schwenkachse ist jeweils ein nach oben abstehendes Lehnenschwert an beiden Seiten des hinteren Bereichs des Sitzrahmens ausgebildet. An dem jeweiligen Lehnenschwert ist ein unterer Endbereich eines Seitenholms angeordnet. Der jeweilige Seitenholm ist an seinem unteren Endbereich so ausgebildet, dass sich eine formschlüssige Aufnahme des Lehenschwertes im montierten Zustand ergibt.

Der jeweilige Seitenholm weist jeweils ein vorderes Längsprofil und ein hinteres Längsprofil auf. Das vordere Längsprofil ist mit einem Querschnitt versehen, der eine Streckung des vorderen Längsprofils bei einer Zugbelastung des vorderen Längsprofils ermöglicht. Das hintere Längsprofil weist einen Querschnitt auf, der eine Kompression des hinteren Längsprofils bei einer Biegemomentbelastung des hinteren Längsprofils ermöglicht. Vorteilhafterweise führt die Streckung des vorderen Längsprofils und die Kompression des hinteren Längsprofils zu einer Energieabsorption.

In einer vorteilhaften Ausführungsform ist das vordere Längsprofil mit Erhöhungen und Vertiefungen ausgebildet. Ein Abstand t zwischen zwei benachbarten Erhöhungen oder Vertiefungen liegt bei 5 cm ≤ t ≤ 8 cm je nach Gesamtlänge des jeweiligen Seitenholms.

Vorteilhafterweise weist das vordere Längsprofil im Querschnitt einen wellenförmigen Verlauf auf.

Das hintere Längsprofil bildet erfindungsgemäss mit dem vorderen Längsprofil geschlossene Hohlräume. Das hintere Längsprofil weist zwischen den geschlossenen Hohlräumen offene Zwischenräume auf. Bei einer Biegebelastung verkleinert sich der jeweilige Abstand in Längsrichtung des jeweiligen Seitenholms zwischen den offenen Zwischenräumen, so dass sich bei einer Biegemomentbelastung des jeweiligen Seitenholms eine Gesamtlänge des hinteren Längsprofils verringert.

Mindestens ein geschlossener Hohlraum ist vorteilhafterweise mit einem energieabsorbierenden Schaumstoff gefüllt.

In einer vorteilhaften Ausführungsform ist mindestens ein offener Zwischenraum mit einem energieabsorbierenden Schaumstoff gefüllt.

Erfindungsgemäss weist das hintere Längsprofil einen mäanderförmigen Querschnitt auf.

Der mäanderförmige Querschnitt weist in einer vorteilhaften Ausführungsform des hinteren Längsprofils in etwa rechteckförmige Abschnitte auf. Die rechteckförmigen Abschnitte haben einen mittleren Abstand oder eine mittlere Breite in Längsrichtung des hinteren Längsprofils, die bei 3 cm ≤ b ≤ 6 cm liegt.

Die Gesamtlänge des jeweiligen Seitenholms liegt vorteilhafterweise bei 30 cm ≤ L ≤ 60 cm.

In einer vorteilhaften Ausführungsform ist das jeweilige Längsprofil ein Faserverbundwerkstoff ist.

Vorteilhafterweise ist das jeweilige Längsprofil ein kohlenstofffaserverstärkter Kunststoff.

Das jeweilige Längsprofil ist in einer vorteilhaften Ausführungsform ein Laminat aus Organofolien, das aus mehreren Einzellagen jeweils einer thermoplastischen Kunststofffolie und unidirektional gerichteten Langfasern aufgebaut ist.

Das jeweilige Längsprofil ist vorteilhafterweise ein Organoblech, das aus gewebeverstärkten Thermoplasten besteht.

In einer vorteilhaften Ausführungsform ist das vordere Längsprofil und das hintere Längsprofil vor dem Zusammenbau jeweils ein separates, sich in Längsrichtung der Rückenlehne erstreckendes Einzelbauteil. Das obere Ende des vorderen Längsprofils und das obere Ende des hinteren Längsprofils sind im zusammengebauten Zustand miteinander verbunden.

Vorteilhafterweise ist der jeweilige Seitenholm mit dem vorderen Längsprofil und dem hinteren Längsprofil ein einteiliges Bauteil.

Die beiden voneinander beabstandeten Seitenholme sind in einer vorteilhaften Ausführungsform über mindestens einen Querträger miteinander verbunden, so dass sich ein U-förmiges Bauteil oder ein H-förmiges Bauteil ergibt.

Der energieabsorbierende Schaumstoff ist vorteilhafterweise ein expandiertes Polypropylen (EPP).

Eine Ausführungsform der Erfindung wird nachstehend anhand der Zeichnungen beispielshalber beschrieben. Dabei zeigen:
- Fig. 1: eine perspektivische Ansicht auf eine Rückseite einer Rückenlehne eines Fahrzeugsitz, wobei eine Außenverkleidung der Rückenlehne weggelassen wurde, damit zwei Seitenholme oder Längsträger der Rückenlehne sichtbar sind und
- Fig. 2: einen Längsschnitt durch einen in der Fig. 1 gezeigten Seitenholm oder Längsträger der Rückenlehne.

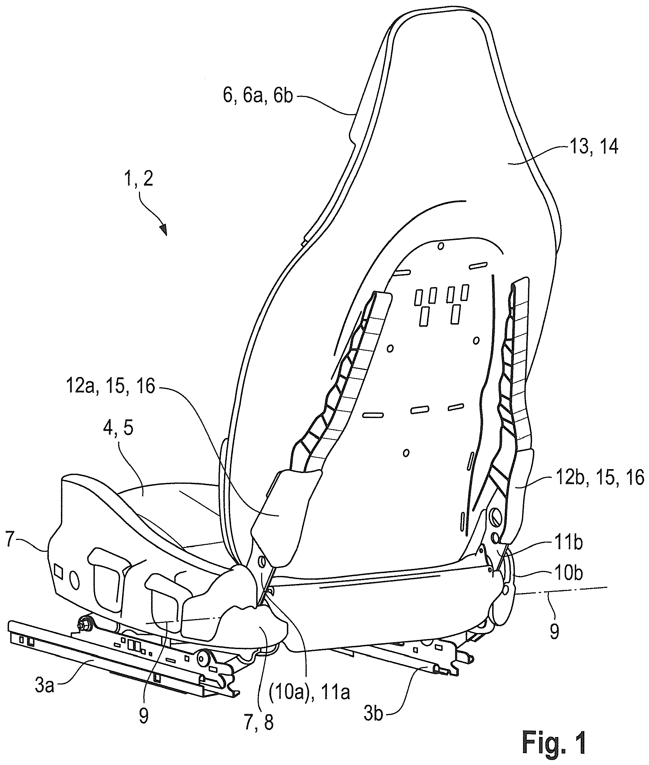

Die Fig. 1 zeigt einen Einzelsitz 2, der über zwei voneinander beabstandete Führungsschienen 3a, 3b an einem nicht weiter dargestellten Boden einer Karosserie eines Kraftfahrzeuges 1 befestigt ist. Der Sitz 2 weist ein Sitzteil 4 mit einer Sitzfläche 5 und eine Rückenlehne 6 auf.

Das Sitzteil 4 hat einen Sitzrahmen 7 mit einem hinteren Bereich 8, an dem eine Schwenkachse 9 über beidseitig angeordnete Beschläge oder Verstellmechanismen 10 ausgebildet ist. An jeweils einem Verstellmechanismus 10a, 10b ist jeweils ein Lehnenschwert 11a und 11b angeordnet. An dem jeweiligen Lehnenschwert 11a und 11b ist jeweils ein Seitenholm 12a und 12b angeordnet.

Der jeweilige Seitenholm 12a und 12b ist an einer Außenfläche 13 einer Lehnenschale 14 angeordnet, die nach hinten in Richtung einer nicht dargestellten Rücksitzbank oder eines Rücksitzes zeigt. An der Lehnenschale 14 ist zur nach vorne zeigenden Außenfläche 6a der Rückenlehne 6 eine Polsterung 6b vorgesehen. In einer nicht dargestellten Ausführungsform können die beiden Seitenholme 12a und 12b über einen Querträger miteinander verbunden sein, wie dies aus der DE 100 47 770 A1 bekannt ist.

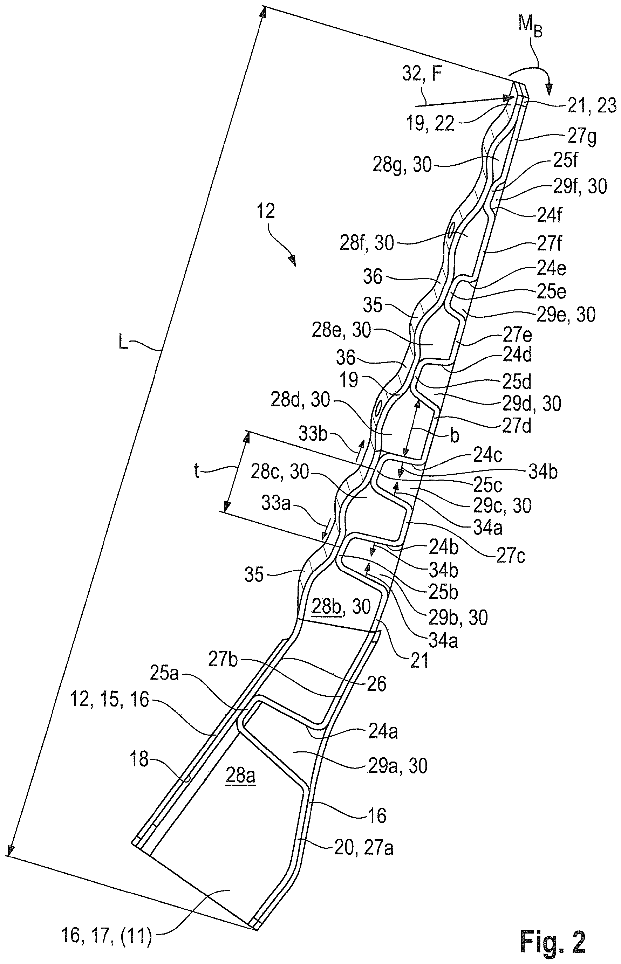

Aus der Fig.2 geht hervor, dass an einem unteren Bereich 15 des jeweiligen Seitenholms 12 ein Befestigungsabschnitt 16 zur Anordnung des jeweiligen Lehnenschwertes 11 ausgebildet ist. Der jeweilige Befestigungsabschnitt 16 weist einen Hohlraum 17 auf, in dem das jeweilige Lehnenschwert 11 eingefügt und befestigt ist. Der jeweilige Seitenholm 12 weist jeweils zwei gegenüberliegende Längsabschnitte19 und 21 auf, die sich über die gesamte Länge des jeweiligen Seitenholms 12 bis in den jeweiligen Befestigungsabschnitt 16 hinein erstrecken.

Der jeweilige Befestigungsabschnitt 16 des jeweiligen Seitenholms 12 umgibt in der gezeigten Ausführungsform ein unteres Ende 18 des vorderen Längsabschnittes 19. Dazu gegenüberliegend ist ein unteres Ende 20 des hinteren Längsabschnittes 21 befestigt. An einem jeweiligen oberen Ende 22, 23 des vorderen Längsabschnittes 19 und des hinteren Längsabschnittes 21 sind die beiden Längsabschnitte 19, 21 miteinander verbunden.

Der vordere Längsabschnitt 19 weist in der gezeigten Ausführungsform einen wellenförmigen Verlauf auf, wie dies aus der Fig. 2 hervorgeht. Der wellenförmige Verlauf des vorderen Längsprofils 19 weist Erhöhungen 35 und Vertiefungen 36 auf. Ein Abstand zwischen zwei benachbarten Erhöhungen 35 oder Vertiefungen 36 liegt bei 5 cm ≤ t ≤ 8 cm je nach Gesamtlänge L des jeweiligen Seitenholms 12a, 12b.

Der hintere Längsabschnitt 21 weist einen mäanderförmig verlaufenden Querschnitt auf. In der gezeigten Ausführungsform des mäanderförmig verlaufenden Querschnittes des hinteren Längsabschnittes 21 sind rechteckförmige Abschnitte 24a bis 24f ausgebildet.

Die in Längsrichtung des Seitenholms 12 verlaufenden Abschnitte 25a bis 25f der rechteckförmigen Abschnitte 24a bis 24f des hinteren Längsabschnittes 21 liegen an einer Innenfläche 26 des vorderen Längsabschnittes 19 an oder sind in einem geringen Abstand t zur Innenfläche 26 des vorderen Längsabschnittes 19 beabstandet. Der Abstand beträgt t ≤ 3 mm ± 2 mm.

An die rechteckförmigen Abschnitte 24a bis 24f des hinteren Längsabschnittes 21 schließen sich hintere Längsabschnitte 27a bis 27g an. Durch die hinteren Längsabschnitte 27a bis 27g sind die rechteckförmigen Abschnitte 24a bis 24f des hinteren Längsabschnittes 21 miteinander verbunden. Durch diese Bauweise ergeben sich Hohlräume 28a bis 28g zwischen dem vorderen Längsabschnitt 19 und dem hinteren Längsabschnitt 21.

Ferner sind außerhalb des unteren Befestigungsabschnittes 16 des Seitenholms 12 nach hinten hin offene Zwischenräume 29a bis 29f an dem hinteren Längsabschnitt 21 ausgebildet.

In einer Ausführungsform sind die offenen Zwischenräume 29a bis 29f mit einem energieabsorbierenden Schaumstoff 30, wie beispielsweise EPP, gefüllt. In einer Ausführungsform sind auch die geschlossenen Hohlräume 28b bis 28g mit einem energieabsorbierenden Schaumstoff 30 gefüllt.

Bei einer Belastung der Rückenlehne 6 und damit des jeweiligen Seitenholms 12a und 12b mit einer Kraft F und einem durch Multiplikation mit dem Hebelarm L resultierenden Biegemoment M_{B} = F∘L ergibt sich ein Energieabbau durch eine Streckung des Wellenprofils des vorderen Längsabschnittes 19 und durch eine Kompression des jeweiligen Schaumstoffes in den Zwischenräumen 29a bis 29f.

Bei einer Belastung des jeweiligen Seitenholms 12a und 12b entsprechend dem Pfeil 32 erfolgt an dem vorderen, wellenförmigen Längsprofil 19 eine Zugbelastung entsprechend den beiden Pfeilen 33a und 33b und führt somit zu einem Strecken des vorderen Längsprofils 19.

Da sich das hintere Längsprofil 21 bei der Belastung entsprechend dem Pfeil 32 verkürzt, wird gleichzeitig der in den Zwischenräumen 29a bis 29f befindliche energieabsorbierende Schaumstoff 30 entsprechend den beiden Pfeilen 34a und 34b zusammengepresst. Durch die Kompression des energieabsorbierenden Schaumstoffes 30 wird Energie abgebaut.

Die beiden Längsprofile 19 und 21 sind in einer Ausführungsform aus einem Faserverbundwerkstoff hergestellt. Der Faserverbundwerkstoff kann dabei ein kohlenstofffaserverstärkter Kunststoff sein.

In einer anderen Ausführungsform bestehen die Längsprofile 19, 21 aus gewebeverstärkten Thermoplasten.

In einer weiteren Ausführungsform sind die Längsträgerprofile 19 und 21 aus einem Thermoplasten hergestellt.

In einer weiteren Ausführungsform bestehen die Längsprofile 19 und 21 aus einer Organofolie. Die Organofolie ist ein Faserverbundwerkstoff, der aus einer thermoplastischen Kunststofffolie und unidirektional gerichteten Langfasern hergestellt wird. Die Faserlänge kann dabei etwa 60 mm betragen. Aus der Organofolie wird ein Laminat produziert, das aus mehreren Einzellagen besteht. Die Einzellagen sind entsprechend einem vorherberechneten Kraftverlauf mit unterschiedlicher Orientierung aufeinander abgelegt und dann miteinander verbunden worden.

## Patentansprüche

1. Kraftfahrzeug (1) mit einer Karosserie, die einen Boden aufweist, wobei an dem Boden mindestens ein Sitz (2) oder mindestens eine Sitzbank angeordnet ist, wobei der Sitz (2) ein Sitzteil (4) mit einer Sitzfläche (5) und eine Rückenlehne (6) mit einer Anlehnfläche aufweist, wobei das Sitzteil (4) mit einem Sitzrahmen (7) versehen ist, wobei an einem hinteren Bereich (8) des Sitzrahmens (7) jeweils ein Verstellmechanismus (10) ausgebildet ist, der eine Schwenkachse (9) bildet, um die die Rückenlehne (6) verschwenkbar ist, wobei jeweils ein nach oben abstehendes Lehnenschwert (11) an beiden Seiten des hinteren Bereichs (8) des Sitzrahmens (7) ausgebildet ist, wobei an dem jeweiligen Lehnenschwert (11) ein unterer Endbereich eines Seitenholms (12) angeordnet ist,
**dadurch gekennzeichnet, dass** der jeweilige Seitenholm (12a, 12b) jeweils ein vorderes Längsprofil (19) und ein hinteres Längsprofil (21) aufweist, dass das vordere Längsprofil (19) einen Querschnitt aufweist, der eine Streckung des vorderen Längsprofils (19) bei einer Zugbelastung des vorderen Längsprofils (19) ermöglicht, und dass das hintere Längsprofil (21) einen Querschnitt aufweist, der eine Kompression des hinteren Längsprofils (21) bei einer Biegemomentbelastung des hinteren Längsprofils (21) ermöglicht und dass die Streckung des vorderen Längsprofils (19) und die Kompression des hinteren Längsprofils (21) zu einer Energieabsorption führt,
dass das hintere Längsprofil (21) mit dem vorderen Längsprofil (19) geschlossene Hohlräume (28a bis 28g) bildet, dass das hintere Längsprofil (21) zwischen den geschlossenen Hohlräumen (28a bis 28g) offene Zwischenräume (29a bis 29f) aufweist, und dass sich bei einer Biegebelastung der jeweilige Abstand zwischen den offenen Zwischenräumen (29a bis 29f) in Längsrichtung des jeweiligen Seitenholms (12a, 12b) verkleinert, so dass sich bei einer Biegemomentbelastung des jeweiligen Seitenholms (12a, 12b) eine Gesamtlänge (L) des hinteren Längsprofils (21) verringert, und dass das hintere Längsprofil (21) einen mäanderförmigen Querschnitt aufweist.

2. Kraftfahrzeug nach Anspruch 1,
**dadurch gekennzeichnet, dass** das vordere Längsprofil (19) mit Erhöhungen (35) und Vertiefungen (36) ausgebildet ist, und dass ein mittlerer Abstand t zwischen zwei benachbarten Erhöhungen (35) oder Vertiefungen (36) bei 5 cm ≤ t ≤ 8 cm je nach Gesamtlänge L des jeweiligen Seitenholms (12a, 12b) liegt.

3. Kraftfahrzeug nach Anspruch 2,
**dadurch gekennzeichnet, dass** das vordere Längsprofil (19) im Querschnitt einen wellenförmigen Verlauf aufweist.

4. Kraftfahrzeug nach einem der vorhergehenden Ansprüche,
**dadurch gekennzeichnet, dass** mindestens ein geschlossener Hohlraum (28a bis 28g) mit einem energieabsorbierenden Schaumstoff (30) gefüllt ist.

5. Kraftfahrzeug nach einem der vorhergehenden Ansprüche,
**dadurch gekennzeichnet, dass** mindestens ein offener Zwischenraum (29a bis 29f) mit einem energieabsorbierenden Schaumstoff (30) gefüllt ist.

6. Kraftfahrzeug nach einem der vorhergehenden Ansprüche,
**dadurch gekennzeichnet, dass** der mäanderförmige Querschnitt des hinteren Längsprofils (21) in etwa rechteckförmige Abschnitte (24a bis 24f) aufweist und dass die rechteckförmigen Abschnitte (24a bis 24f) einen mittleren Abstand oder eine mittlere Breite (b) in Längsrichtung des hinteren Längsprofils (21) haben, die bei 3 cm ≤ b ≤ 6 cm liegt.

7. Kraftfahrzeug nach einem der vorhergehenden Ansprüche,
**dadurch gekennzeichnet, dass** die Gesamtlänge (L) des jeweiligen Seitenholms (12a, 12b) bei 30 cm ≤ L ≤ 60 cm liegt.

8. Kraftfahrzeug nach einem der vorhergehenden Ansprüche,
**dadurch gekennzeichnet, dass** das jeweilige Längsprofil (19, 21) ein Faserverbundwerkstoff ist.

9. Kraftfahrzeug nach Anspruch 8,
**dadurch gekennzeichnet, dass** das jeweilige Längsprofil (19, 21) ein kohlenstofffaserverstärkter Kunststoff ist.

10. Kraftfahrzeug nach Anspruch 8,
**dadurch gekennzeichnet, dass** das jeweilige Längsprofil (19, 21) ein Laminat aus Organofolien ist, das aus mehreren Einzellagen jeweils einer thermoplastischen Kunststofffolie und unidirektional gerichteten Langfasern aufgebaut ist.

11. Kraftfahrzeug nach Anspruch 8,
**dadurch gekennzeichnet, dass** das jeweilige Längsprofil (19, 21) ein Organoblech ist, das aus gewebeverstärkten Thermoplasten besteht.

12. Kraftfahrzeug nach einem der vorhergehenden Ansprüche,
**dadurch gekennzeichnet, dass** das vordere Längsprofil (19) und das hintere Längsprofil (21) vor dem Zusammenbau jeweils ein separates, sich in Längsrichtung der Rückenlehne (6) erstreckendes Einzelbauteil ist und dass das obere Ende (22) des vorderen Längsprofils (19) und das obere Ende (23) des hinteren Längsprofils (21) im zusammengebauten Zustand miteinander verbunden sind.

13. Kraftfahrzeug nach einem der Ansprüche 1 bis 11,
**dadurch gekennzeichnet, dass** der jeweilige Seitenholm (12a, 12b) mit dem vorderen Längsprofil (19) und dem hinteren Längsprofil (21) ein einteiliges Bauteil ist.

14. Kraftfahrzeug nach einem der vorhergehenden Ansprüche,
**dadurch gekennzeichnet, dass** die beiden voneinander beabstandeten Seitenholme (12a, 12b) über mindestens einen Querträger miteinander verbunden sind, so dass sich ein U-förmiges Bauteil oder ein H-förmiges Bauteil ergibt.

15. Kraftfahrzeug nach einem der Ansprüche 4 oder 5,
**dadurch gekennzeichnet, dass** der energieabsorbierende Schaumstoff (30) ein expandiertes Polypropylen (EPP) ist.

## Claims

1. A motor vehicle (1), comprising a chassis which has a floor, at least one seat (2) or at least one bench seat being arranged on the floor, the seat (2) having a seat part (4) with a seating surface (5) and a backrest (6) with a reclining surface, the seat part (4) being provided with a seat frame (7), an adjustment mechanism (10) being formed on a rear region (8) of the seat frame (7) in each case, which mechanism forms a pivot axis (9) about which the backrest (6) can be pivoted, an upwardly protruding reclining fin (11) being formed on the two sides of the rear region (8) of the seat frame (7) in each case, a lower end region of a side bar (12) being arranged on each reclining fin (11),
**characterised in that** each side bar (12a, 12b) has a front longitudinal profile (19) and a rear longitudinal profile (21), **in that** the front longitudinal profile (19) has a cross section which allows stretching of the front longitudinal profile (19) when there is a tensile load on the front longitudinal profile (19), and the rear longitudinal profile (21) has a cross section which allows compression of the rear longitudinal profile (21) when there is a bending moment load on the rear longitudinal profile (21), and **in that** the stretching of the front longitudinal profile (19) and the compression of the rear longitudinal profile (21) lead to energy absorption,
**in that** the rear longitudinal profile (21) together with the front longitudinal profile (19) forms closed cavities (28a to 28g), **in that** the rear longitudinal profile (21) has open gaps (29a to 29f) between the closed cavities (28a to 28g), and **in that**, in the case of a bending load, the respective distance between the open gaps (29a to 29f) decreases in the longitudinal direction of each side bar (12a, 12b) such that, in the case of a bending moment load on the respective side bar (12a, 12b), a total length (L) of the rear longitudinal profile (21) decreases, and
**in that** the rear longitudinal profile (21) has a meandering cross section.

2. A motor vehicle according to claim 1,
**characterised in that** the front longitudinal profile (19) is formed with elevations (35) and depressions (36), and **in that** an average distance t between two adjacent elevations (35) or depressions (36) is 5 cm ≤ t ≤ 8 cm depending on the total length L of the respective side bar (12a, 12b).

3. A motor vehicle according to claim 2,
**characterised in that** the front longitudinal profile (19) has a wave-shaped course in its cross section.

4. A motor vehicle according to any of the preceding claims,
**characterised in that** at least one closed cavity (28a to 28g) is filled with an energy-absorbing foam (30).

5. A motor vehicle according to any of the preceding claims,
**characterised in that** at least one open gap (29a to 29f) is filled with an energy-absorbing foam (30).

6. A motor vehicle according to any of the preceding claims,
**characterised in that** the meandering cross section of the rear longitudinal profile (21) comprises approximately rectangular portions (24a to 24f), and **in that** the rectangular portions (24a to 24f) have an average spacing or an average width (b) of 3 cm ≤ b ≤ 6 cm in the longitudinal direction of the rear longitudinal profile (21).

7. A motor vehicle according to any of the preceding claims,
**characterised in that** the total length (L) of each side bar (12a, 12b) is 30 cm ≤ L ≤ 60 cm.

8. A motor vehicle according to any of the preceding claims,
**characterised in that** each longitudinal profile (19, 21) is a fibre-composite material.

9. A motor vehicle according to claim 8,
**characterised in that** each longitudinal profile (19, 21) is a carbon-fibre-reinforced plastic.

10. A motor vehicle according to claim 8,
**characterised in that** each longitudinal profile (19, 21) is a laminate composed of organic films, which is constructed from a plurality of individual layers of a thermoplastic plastic film and unidirectional longitudinal fibres in each case.

11. A motor vehicle according to claim 8,
**characterised in that** each longitudinal profile (19, 21) is an organic sheet which consists of fabric-reinforced thermoplastics.

12. A motor vehicle according to any of the preceding claims,
**characterised in that** the front longitudinal profile (19) and the rear longitudinal profile (21), before assembly, are separate individual components in each case, extending in the longitudinal direction of the backrest (6), and **in that** the upper end (22) of the front longitudinal profile (19) and the upper end (23) of the rear longitudinal profile (21) are interconnected when assembled.

13. A motor vehicle according to any of claims 1 to 11,
**characterised in that** each side bar (12a, 12b) is a component which is integral with the front longitudinal profile (19) and the rear longitudinal profile (21).

14. A motor vehicle according to any of the preceding claims,
**characterised in that** the two side bars (12a, 12b), which are at a distance from each other, are interconnected by means of at least one cross beam so that a U-shaped component or an H-shaped component is produced.

15. A motor vehicle according to either claim 4 or claim 5, **characterised in that** the energy-absorbing foam (30) is an expanded polypropylene (EPP).

## Revendications

1. Véhicule automobile (1) comprenant une carrosserie comportant un plancher, sur lequel est monté au moins un siège (2) ou au moins une banquette, le siège (2) comprenant une partie d'assise (4) ayant une surface d'assise (5) et un dossier (6) ayant une surface d'adossement, la partie d'assise (4) étant équipée d'un cadre d'assise (7), dans la zone arrière (8) du cadre d'assise (7) étant respectivement formé un mécanisme de réglage (10) qui forme un axe de pivotement (9) autour duquel le dossier (6) peut pivoter, une lame d'appui (11) se prolongeant vers le haut étant respectivement formée des deux côtés de la zone arrière (8) du cadre d'assise (7), sur les lames d'appui (11) respectives étant respectivement montée une zone d'extrémité d'un longeron latéral (12), **caractérisé en ce que**
chaque longeron latéral (12a, 12b) comporte un profilé longitudinal avant (19) et un profilé longitudinal arrière (21), le profilé longitudinal avant (19) a une section qui permet son étirement lors d'une sollicitation en traction de celui-ci, et le profilé longitudinal arrière (21) a une section qui permet sa compression lors d'une sollicitation par un couple de flexion de celui-ci, et l'étirement du profilé longitudinal avant (19) et la compression du profilé longitudinal arrière (21) entraînent à une absorption d'énergie,
le profilé longitudinal arrière (21) forme avec le profilé longitudinal avant (19) des volumes creux fermés (28a à 28g), le profilé longitudinal arrière (21) comporte, entre les volumes creux fermés (28a à 28g) des volumes intermédiaires ouverts (29a à 29f), et, en présence d'une sollicitation en flexion, la distance respective entre les volumes intermédiaires ouverts (29a à 29f) dans la direction longitudinale du longeron latéral respectif se réduit de sorte que, lors d'une sollicitation par un couple de flexion du longeron latéral (12a, 12b) respectif, la longueur globale (L) du profilé longitudinal arrière (21) diminue et le profilé longitudinal arrière (21) a une section en forme de méandres.

2. Véhicule automobile conforme à la revendication 1,
**caractérisé en ce que**
le profilé longitudinal avant (19) est réalisé avec des bossages (35) et des renfoncements (36) et la distance moyenne t entre deux bossages (35) ou renfoncements (36) voisins satisfait à la relation 5 cm ≤ t ≤ 8 cm selon la longueur globale L du longeron latéral (12a, 12b) respectif.

3. Véhicule automobile conforme à la revendication 2,
**caractérisé en ce que**
le profilé longitudinal avant (19) a en section un tracé en forme d'onde.

4. Véhicule automobile conforme à l'une des revendications précédentes,
**caractérisé en ce qu'**
au moins un volume creux fermé (28a à 28g) est rempli d'une mousse (30) absorbant l'énergie.

5. Véhicule automobile conforme à l'une des revendications précédentes,
**caractérisé en ce qu'**
au moins un volume intermédiaire ouvert (29a à 29f) est rempli d'une mousse absorbant l'énergie (30).

6. Véhicule automobile conforme à l'une des revendications précédentes,
**caractérisé en ce que**
la section en forme de méandres du profilé longitudinal arrière (21) comporte des segments (24a à 24f) essentiellement rectangulaires et les segments rectangulaires (24a à 24f) ont une distance moyenne ou une largeur moyenne (b) dans la direction longitudinale du profilé longitudinal arrière (21) satisfaisant à la relation 3 cm ≤ b ≤ 6 cm.

7. Véhicule automobile conforme à l'une des revendications précédentes,
**caractérisé en ce que**
la longueur globale (L) du longeron latéral (12a, 12b) respectif satisfait à la relation 30 cm ≤ L ≤ 60 cm.

8. Véhicule automobile conforme à l'une des revendications précédentes,
**caractérisé en ce que**
chaque profilé longitudinal (19, 21) est réalisé en un matériau composite renforcé par des fibres.

9. Véhicule automobile conforme à la revendication 8,
**caractérisé en ce que**
chaque profilé longitudinal (19, 21) est réalisé en un matériau synthétique renforcé par des fibres de carbone.

10. Véhicule automobile conforme à la revendication 8,
**caractérisé en ce que**
chaque profilé longitudinal (19, 21) est un stratifié de feuilles organiques qui est réalisé à partir de plusieurs couches individuelles d'une feuille en un matériau synthétique thermoplastique et de fibres longitudinales à orientation unidirectionnelle.

11. Véhicule conforme à la revendication 8,
**caractérisé en ce que**
chaque profilé longitudinal (19, 21) est une tôle organique constituée de polymères thermodurcissables renforcés par un tissu.

12. Véhicule automobile conforme à l'une des revendications précédentes,
**caractérisé en ce que**
le profilé longitudinal avant (19) et le profilé longitudinal arrière (21) sont, respectivement avant l'assemblage des pièces séparées s'étendant dans la direction longitudinale du dossier (6), et l'extrémité supérieure (22) du profilé longitudinal avant (19) et l'extrémité supérieure (23) du profilé longitudinal arrière (21) sont reliées à l'état assemblé.

13. Véhicule automobile conforme à l'une des revendications 1 à 11,
**caractérisé en ce que**
chaque longeron latéral (12a, 12b) est un élément en une seule pièce avec le profilé longitudinal avant (19) et le profilé longitudinal arrière (21).

14. Véhicule automobile conforme à l'une des revendications précédentes,
**caractérisé en ce que**
les deux longerons latéraux (12a, 12b) situés à distance l'un de l'autre sont reliés par au moins une traverse de façon à obtenir une pièce en forme de U ou en forme de H.

15. Véhicule automobile conforme à l'une des revendications 4 et 5,
**caractérisé en ce que**
la mousse absorbant l'énergie (30) est un polypropylène expansé (EPP).
